# EUROPEAN PATENT SPECIFICATION

(11) **EP 4 348 383 B1**
(45) Date of publication and mention of the grant of the patent: **28.01.2026**
(21) Application number: 22728296.9
(22) Date of filing: 26.05.2022
(51) Int. Cl.: G05D 16/00, G05D 16/06

(54) **PRESSURE STABILISING VALVE ESPECIALLY FOR REVERSE OSMOSIS FILTRATION PLANTS**
DRUCKSTABILISIERUNGSVENTIL, INSBESONDERE FÜR UMKEHROSMOSE-FILTRATIONSANLAGEN
SOUPAPE DE STABILISATION DE PRESSION, EN PARTICULIER POUR INSTALLATIONS DE FILTRATION À OSMOSE INVERSE

(30) Priority: 01.06.2021 IT 202100014297
(43) Date of publication of application: 10.04.2024
(73) Proprietor: Fil.Tech Srl, 42048 Rubiera (RE) (IT)
(72) Inventor: AMADUZZI, Roberto, 42048 Rubiera (RE) (IT)
(74) Representative: Corradini, Corrado
(86) International application number: PCT/IB2022/054950
(87) International publication number: WO 2022/254291

(56) References cited:
- CN-A- 104 609 506
- US-A- 3 561 468
- US-A- 4 230 564
- US-A1- 2014 261 785

## Description

### Technical Field

The present invention relates to a pressure stabilising valve and, more particularly, to a pressure stabilising valve that is intended to be installed in the concentrate duct of a reverse osmosis filtration plant.

### State of the art

It is well known that two solutions with a different concentration of dissolved substances (e.g. salts) have a different molarity and consequently a different osmotic pressure value.

When these solutions are separated by a semi-permeable osmotic membrane, the difference in osmotic pressure produces a migration of the solvent (such as water) from the solution with the lower concentration to the solution with the higher concentration, until two solutions having the same concentration are obtained.

However, if a purer solvent (e.g. purer water) is desired, it must run the reverse route, i.e. from the solution with the higher concentration (called concentrate) to the solution with the lower concentration (called permeate).

In order to achieve this "reverse osmosis" process it is necessary to apply a pressure difference opposite and greater than the osmotic pressure difference between the solution with the higher concentration and the solution with the lower concentration.

Based on this principle, a typical reverse osmosis filtration plant generally comprises at least one container (named as vessel), the internal volume of which is divided into three distinct chambers by an osmotic membrane.

A first one of these chambers is in communication with an inlet duct of the solution to be filtered, a second chamber is in communication with an outlet duct of the permeate, while a third chamber is in communication with an outlet duct of the concentrate, so that the solution to be filtered can flow tangentially over the surface of the osmotic membrane.

The solution to be filtered is fed to the inlet duct through a pump, e.g. a positive displacement pump, which may be placed in series with a solenoid valve, while the concentrate outlet duct is generally intercepted by a flow restrictor that increases the pressure in the first and third chambers of the vessel to such an extent that the pressure difference between these chambers and the second chamber is greater than the osmotic pressure difference.

Thereby, while the solution to be filtered flows within the vessel from the inlet duct to the concentrate outlet duct, at least part of the solvent contained therein (e.g. pure water) passes through the osmotic membrane and reaches the permeate outlet duct.

The flow restrictor therefore plays a fundamental role in the proper functioning of the reverse osmosis filtration plant, as it must be able to apply the necessary and sufficient hydrodynamic resistance to the concentrate to create a pressure delta greater than the osmotic pressure difference.

This pressure delta must also have an optimal value: by raising the pressure, both the permeate flow rate and salt rejection (percentage of salts removed) increase.

However, the pressure delta generated by a flow restrictor having a (fixed) given geometry also depends on the concentrate flow rate passing through it, which is not always constant but can vary depending on several factors.

One of these factors is represented by the efficiency of the osmotic membrane, i.e. the percentage of solvent that the osmotic membrane is able to let pass towards the second chamber of the permeate.

For a predefined flow rate of solution to be filtered, there are in fact conditions for which the osmotic membrane is able to let a greater amount of solvent pass, increasing the flow rate that reaches the permeate outlet duct and reducing the flow rate that reaches the concentrate outlet duct and other conditions for which the osmotic membrane is able to let a smaller amount of solvent pass, reducing the flow rate that reaches the permeate outlet duct and increasing the flow rate that reaches the concentrate outlet duct.

These conditions include, in particular but not exclusively, temperature, which has a strong impact on the efficiency of the osmotic membrane (up to 50%).

For these reasons, a significant fluctuation in the concentrate flow rate can occur during the operation of a reverse osmosis plant, which also has a direct impact on the pressure.

In particular, a decrease in the concentrate flow rate generally leads to a reduction in the pressure within the first and third chamber of the vessel, with a consequent reduction in the purity of the permeate, while an excessive increase in the concentrate flow rate may lead to an increase in pressure to values that are sometimes detrimental to the entire plant.

To partially overcome these problems, it is known to use variable geometry flow restrictors that are manually adjustable by an operator for optimising the concentrate flow according to the conditions.

However, these manual devices cannot guarantee optimal functioning in the case of frequent variations, in addition they require specific skills and subjective evaluation.

There are also flow regulators controlled by feedback-controlled electromechanical mechanisms.

However, such systems require a control unit and are characterised by a considerable structural complexity that makes them justifiable only on large, high-performance industrial plants.

Due to the considerable structural complexity, these devices also introduce multiple malfunctioning possibilities and may be prone to easy clogging, being run by solutions with high concentrations of salts and/or other substances.

In order to overcome pressure surges, recirculating pressure regulators may also be used, which send back excess pressurised water upstream of the pump.

However, this solution entails an obvious waste of energy, the possibility of damaging prematurely the membranes (as a part of the water is not used), as well as the precipitation of salts due to the forced lamination, which, being reintroduced into the vessel containing the membranes, can be harmful.

Documents US2014/261785 and US3561468 describe valves according to the preamble of the independent claim 1.

### Disclosure of the invention

In light of the foregoing, an object of the present invention is to solve, or at least significantly mitigate the aforementioned drawbacks of the prior art.

Another object is that of achieving such an objective within the context of a simple, rational and relatively cost-effective solution.

These and other objects are reached thanks to the characteristics of the invention as set forth in the independent claims. The dependent claims outline preferred and/or particularly advantageous aspects of the invention but not strictly necessary for implementing it.

In particular, an embodiment of the present invention makes available a pressure stabilising valve, comprising:
- an inlet chamber,
- an outlet chamber,
- a cylindrical hole adapted to make the inlet chamber communicate with the outlet chamber,
- a shutter element provided with a stem coaxially inserted into the cylindrical hole,
- a spring adapted to push the shutter element towards a first end-of-stroke position, wherein the stem defines with the cylindrical hole a passage port which leaves open the communication between the inlet chamber and the outlet chamber, and
- a pushing surface radially protruding with respect to the stem and adapted to at least partially delimit the inlet chamber, which is adapted to transform the pressure prevailing in the inlet chamber into a force that pushes the shutter element in contrast with the action of the spring towards a second end-of-stroke position, progressively increasing the passage port between the stem and the cylindrical hole.

Thanks to this solution, the valve outlined above can be advantageously installed in the concentrate outlet duct of a reverse osmosis filtration plant, achieving the above-mentioned purposes.

In particular, it can be configured in such a way that under nominal conditions, i.e. for a given value of the concentrate flow rate, the pressure established in the inlet chamber lifts the shutter element to a balance position wherein the thrust exerted by the pressure is equal to the thrust exerted by the spring.

From this balance position, if the concentrate flow rate which passes through the valve decreases, the pressure in the inlet chamber will also tend to decrease, allowing the spring to push the shutter element towards the first end-of-stroke position.

This will also reduce the passage port between the inlet and outlet chambers, increasing the pressure drop and thus helping to maintain a high pressure in the inlet chamber and consequently in the membrane container.

In practice, a new balance position will be reached which, following the reduction in flow rate, will still guarantee a pressure value in the inlet chamber that is little different from what it was under nominal conditions.

Conversely, if the flow rate of concentrate flowing through the valve increases, the pressure in the inlet chamber will also tend to increase, overcoming the contrast offered by the spring and pushing the shutter element towards the second end-of-stroke position.

This will also increase the passage port between the inlet chamber and outlet chamber, reducing pressure losses and thus preventing excessive pressure increase in the inlet chamber and consequently in the membrane vessel.

Also in this case, a new balance position will be reached which, following the increase in flow rate, will guarantee a pressure value in the inlet chamber that is little different from what it was under nominal conditions.

Ultimately, the valve according to the invention allows the pressure to be maintained around a desired value, self-adjusting fully automatically as a function of the concentrate flow rate, i.e. with no need for manual intervention by operators, but with no need for complex electronic control systems.

In other words, a limited pressure dependency is achieved as the passed-through flow changes and the maximum pressure is limited without involving other adjustment devices.

Another important advantage of this solution is that, should the flow rate passing through the valve decrease extremely significantly, the shutter element would stop in the first end-of-stroke position, while still leaving open at least a minimum passage port between the inlet chamber and outlet chamber.

The valve thereby always guarantees a certain flow of concentrate which, in the context of a reverse osmosis filtration system, can be advantageous for at least two reasons.

The first reason is that it allows a constant outflow of the concentrate, reducing the possibility of deposits of salts and/or other substances forming on the surface of the osmotic membrane.

The second reason is that there will be no stagnation of concentrate inside the valve, which otherwise, due to the possible precipitation of salts and/or other substances, could clog it or cause it to work improperly.

For example, to avoid water stagnation in the reverse osmosis filtration system after long periods of inactivity, the system may be periodically flushed by opening the solenoid valve but keeping the pump switched off.

Under this circumstance, the design of the valve proposed above allows the valve to be completely flushed as well, whereas in other known types of valves (where bypass ducts or other parallel passages may be present) there are always stagnation points into which water cannot flow except during operation of the plant, i.e. after the pump is also switched on.

Although the advantages of the valve have been described with reference to its use in a reverse osmosis filtration system, it is clear that it could advantageously be used in any other hydraulic plant where it is necessary to limit and stabilise a pressure value as a flow changes.

According to a preferred aspect of the invention, the valve may comprise an inlet duct communicating with the inlet chamber and an outlet duct communicating with the outlet chamber, which have axes mutually coincident orthogonal to the axis of the cylindrical hole.

This results in a very compact valve that can be easily installed along a duct.

Another aspect of the invention provides that the stem of the shutter element may comprise two mutually coaxial cylindrical portions, a first cylindrical portion of which having a larger diameter and a second cylindrical portion having a smaller diameter.

The first cylindrical portion may be at least partially inserted into the cylindrical hole when the shutter element is in the first end-of-stroke position and may be completely extracted from the cylindrical hole when the shutter element is in the second end-of-stroke position.

The second cylindrical portion may be at least partially fitted into the cylindrical hole both when the shutter element is in the first end-of-stroke position and when the shutter element is in the second end-of-stroke position.

In this way it is advantageously possible to achieve a proportional and progressive variation of the passage port, while guaranteeing safe and stable guidance of the shutter element.

In particular, one embodiment of the invention provides that the stem may comprise a plurality of longitudinal fins (or ribs) arranged in a radial arrangement, which radially protrude from the second cylindrical portion and are slidably fitted into the cylindrical hole.

These longitudinal fins act as centering elements of the shutter body with respect to the cylindrical hole, keeping the passage section stable, minimising cavitation phenomena as the concentrate passes through, and eliminating the possibility of front contacts between the edge of the cylindrical hole and the edge of the first cylindrical portion, which could otherwise make the valve functioning uncertain.

According to another aspect of the invention, the stem may comprise a conic connecting portion extending in a tapered way from the first cylindrical portion to the second cylindrical portion.

This conic portion may contribute to a more linear and progressive variation of the passage port as a function of the axial movement of the shutter element.

A further aspect of the invention provides that a free end of the second cylindrical portion can be slidably accommodated into a guide seat arranged coaxial to the cylindrical hole and positioned in the outlet chamber.

This expedient also has the advantage of making the movement of the shutter element inside the cylindrical hole more precise, safe and stable, improving centering (with consequent reduction of cavitation phenomena) and decreasing friction.

According to one aspect of the invention, the aforesaid guide seat may be defined by a plurality of fins (or ribs) arranged radially around the axis of the cylindrical hole.

The guide seat is thereby substantially open, preventing stagnation of the concentrate and thus precipitation from salts and/or other substances that could clog it.

Another aspect of the invention provides that the pushing surface can be made available by a flexible annular membrane, which comprises an inner perimeter border coupled to the stem and an outer perimeter border coupled to a valve body.

Thanks to this solution, the flexible membrane may also act as a gasket to prevent leakage of liquid outside the valve.

Compared to a traditional O-ring sliding coupling, the use of the flexible membrane also has the advantage of preventing clogging, dampening vibrations from cavitation and pressure pulsations from the pump, increasing quietness.

A further aspect of the invention provides that the valve, for example the valve body, may comprise a first stop surface adapted to contact a free end of the second cylindrical portion when the shutter element is in the first end-of-stroke position.

This aspect of the invention ensures a stable stop of the shutter element in the first end-of-stroke position.

According to a further aspect of the invention, the shutter element may comprise a head portion adapted to make available an abutment surface, arranged externally with respect to the inlet chamber, against which a first end of the spring rests.

The spring can thereby be advantageously positioned outside the valve while remaining separated from the liquid flowing through it.

In particular, the head portion of the shutter element can be made in a single body with the stem.

Thanks to this solution, the construction of the valve is made simpler while increasing robustness and reliability thereof.

According to another aspect of the invention, the valve may also comprise a cover adapted to hold the spring.

In this way, the cover protects the spring and keeps it in the correct position to perform its function.

This cover may be provided with a second stop surface adapted to contact the head portion when the shutter element is in the second end-of-stroke position.

This aspect of the invention ensures a stable stop of the shutter element in the second end-of-stroke position.

Another aspect of the invention provides that the valve may comprise an adjustment system to adjust the compression of the spring.

Thanks to this solution, it is advantageously possible to adjust the nominal operating pressure at which the valve operates, depending on the applications in which the valve is used.

This adjustment system may comprise, for example, a slider, which is adapted to be in contact with a second end of the spring, and a screw, which is axially constrained to a top wall of the cover and is screwed to the slider.

In this way, by screwing or unscrewing the screw, it is advantageously possible to bring the slider closer to or further away from the head portion of the shutter element, thus increasing or respectively reducing the compression of the spring interposed between them.

Thanks to this solution, the slider further performs a pure translation movement, without subjecting the spring to torsional stresses that could cause a jerked adjustment thereof.

Another embodiment of the invention finally makes available a reverse osmosis filtration plant comprising:
- at least one container,
- an osmotic membrane adapted to divide the inner volume of the container into three distinct chambers, a first chamber, a second chamber and a third chamber,
- an inlet duct of the liquid to be filtered communicating with the first chamber,
- a first outlet duct of the permeate connected with the second chamber,
- a second concentrate outlet duct connected with the third chamber, and
- the pressure adjustment valve outlined above, whose inlet chamber is connected with the third chamber of the container via the second outlet duct.

This embodiment obviously achieves the same advantages that have already been outlined above.

### Brief description of the drawings

Further features and advantages of the invention will be more apparent after reading the following description provided by way of non-limiting example, with the aid of the figures illustrated in the accompanying drawings.

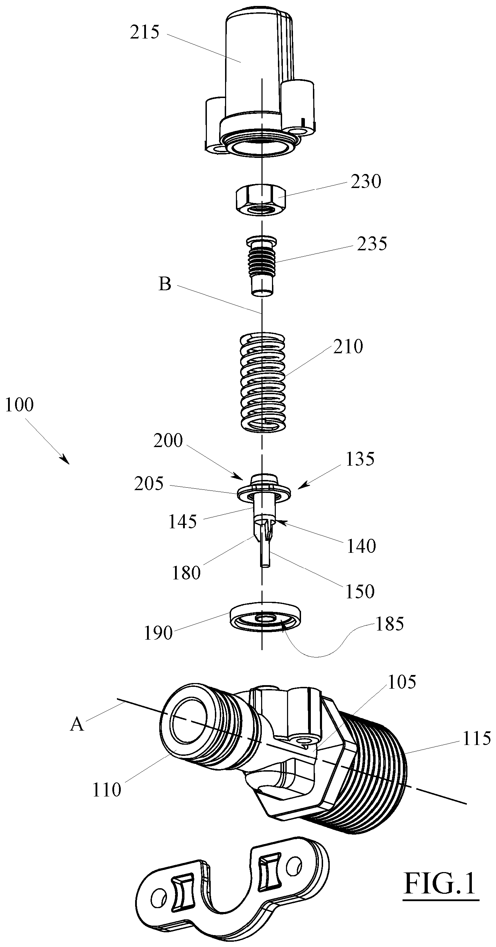

Figure 1 is an exploded axonometric elevation view of a valve according to an embodiment of the present invention.
Figure 2 is a longitudinal section of the valve of Figure 1.
Figure 3 is the section III-III indicated in Figure 2.
Figure 4 is an enlarged detail of Figure 2.
Figure 5 is an enlarged detail of Figure 3.
Figure 6 is a diagram of a reverse osmosis filtration plant comprising the valve of Figure 1.
Figure 7 is an enlarged detail of Figure 6.

### Detailed description

The above figures show a pressure stabilising valve 100, which is mainly but not exclusively intended for use in a reverse osmosis filtration plant.

The valve 100 comprises a valve body 105 in which an inlet duct 110 and an outlet duct 115 are provided for a liquid, for example water wherein salts and/or other substances are dissolved.

Preferably, the valve 100 is a two-way valve, as it is not provided with any other access ducts except for the aforementioned inlet duct 110 and outlet duct 115.

In the preferred embodiment herein shown, the inlet duct 110 and the outlet duct 115 are mutually coaxial, i.e. they extend along a common central axis A.

The inlet duct 110 and/or the outlet duct 115 may be provided with threaded members or any other members to be coupled with pipes or ducts of a hydraulic plant, e.g. but not limited to the aforementioned reverse osmosis filtration system.

Within the valve body 105 an inlet chamber 120, which is in direct hydraulic communication with the inlet duct 110, and an outlet chamber 125, which is in direct hydraulic communication with the outlet duct 115 are further defined.

The inlet chamber 120 and the outlet chamber 125 are connected through a cylindrical hole 130, created inside the valve body 105, which puts them in hydraulic communication.

In some embodiments, the cylindrical hole 130 may not be directly delimited by the material of the valve body 105, but may be delimited by an added cylindrical bush or seat i.e. created as a separate body that is appropriately fitted inside the valve body 105, precisely for the purpose of delimiting the cylindrical hole 130.

This second solution allows the bush or cylindrical seat to be made of a different material than the material constituting the valve body 105, for example in those cases where the latter is not suitable for effectively defining the cylindrical hole 130.

In any case, the cylindrical hole 130 is preferably the only connection between the inlet chamber 120 and the outlet chamber 125, as there is no other passage within the valve body 105 that would allow the liquid present in the inlet chamber 120 to flow into the outlet chamber 125 and vice versa.

In the preferred embodiment herein shown, the cylindrical hole 130 has a central axis B oriented orthogonally to the central axis A of the inlet duct 110 and the outlet duct 115.

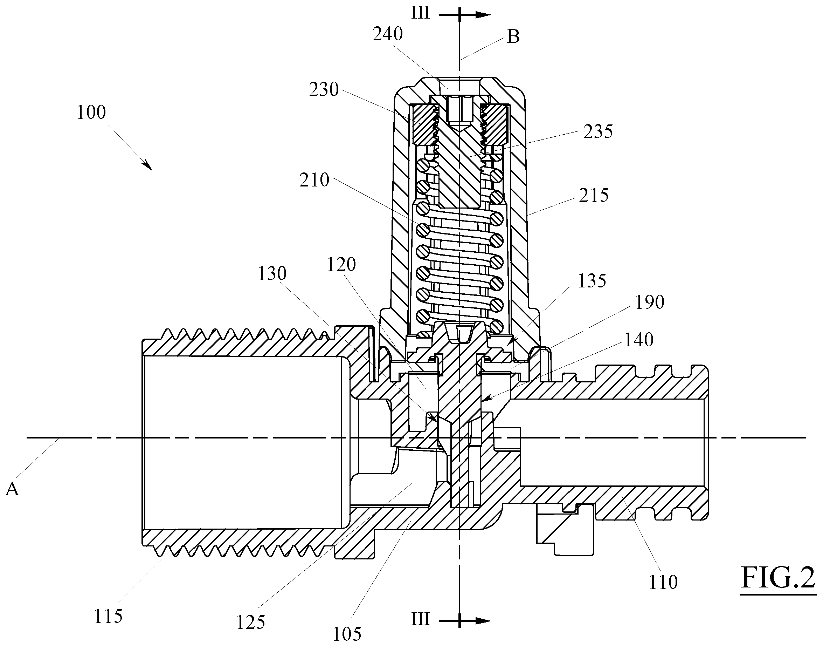

Thereby, compared to the image of Figure 2, the inlet chamber 120 is arranged above the cylindrical hole 130 while the outlet chamber 125 is arranged below it.

The valve 100 further comprises a shutter element, globally referred to as 135, which is adapted to only partially obstruct the cylindrical hole 130 in order to adjust the flow of liquid flowing from the inlet chamber 120 to the outlet chamber 125.

This shutter element 135 comprises a stem 140 (or pin), which is coaxially and smoothly fitted inside the cylindrical hole 130, from which it may protrude extending inside the inlet chamber 120 and possibly also inside the outlet chamber 125.

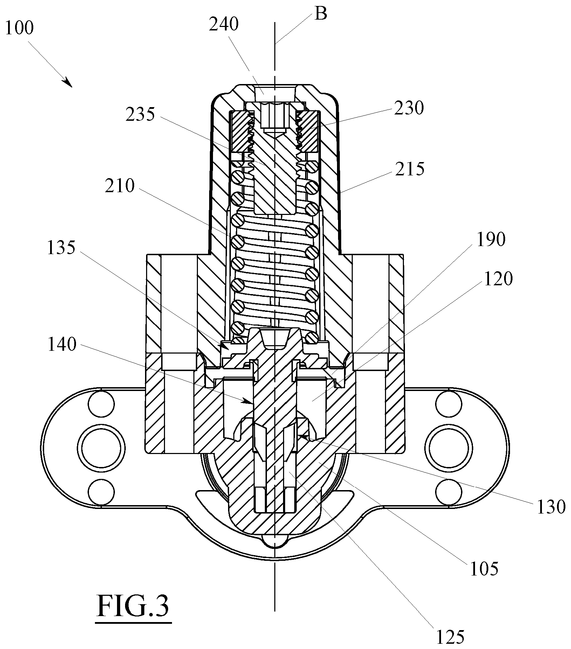

The shutter element 135 is movable, along the direction of the central axis B of the cylindrical hole 130, between a first end-of-stroke position (shown in Figures 2 to 5) and a second end-of-stroke position (not shown).

Whether it is in the first end-of-stroke position or in the second end-of-stroke position, as well as in any other intermediate position, a passage port is always defined between the stem 140 of the shutter element 135 and the cylindrical hole 130, which allows hydraulic communication between the inlet chamber 120 and the outlet chamber 125.

The size of such passage port, however, is minimal, when the shutter element 135 is in the first end-of-stroke position, and can gradually increase as the shutter element 135 moves to the second end-of-stroke position.

For example, the shape of the stem 140 and the cylindrical hole 130 may be chosen so that the size of the passage port increases linearly as a function of the movement of the shutter element 135, starting from a minimum size, which is obtained when the shutter element 135 is in the first end-of-stroke position, up to a maximum size, which is obtained when the shutter element 135 is in the second end-of-stroke position.

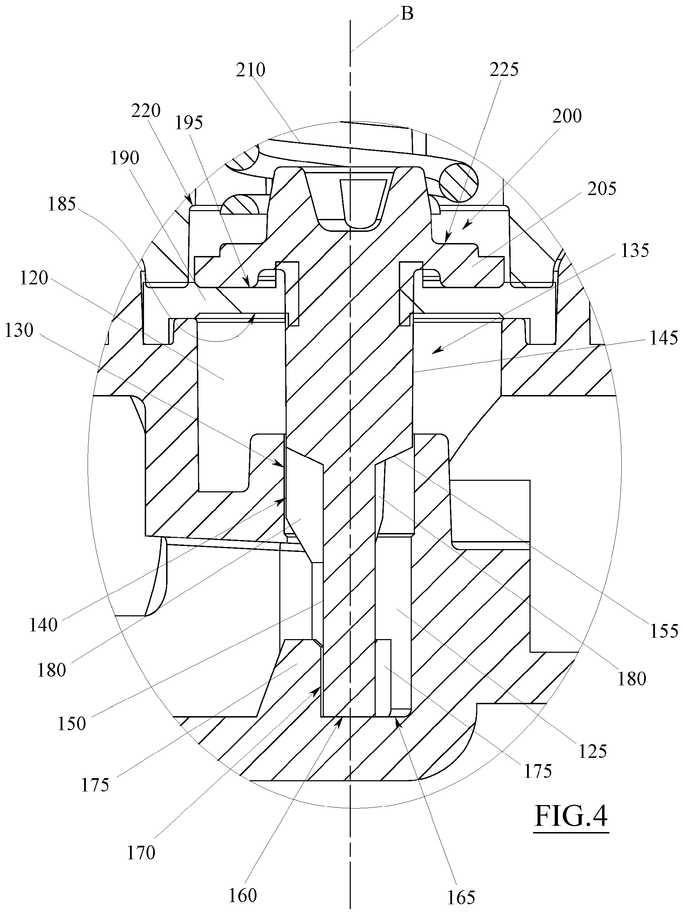

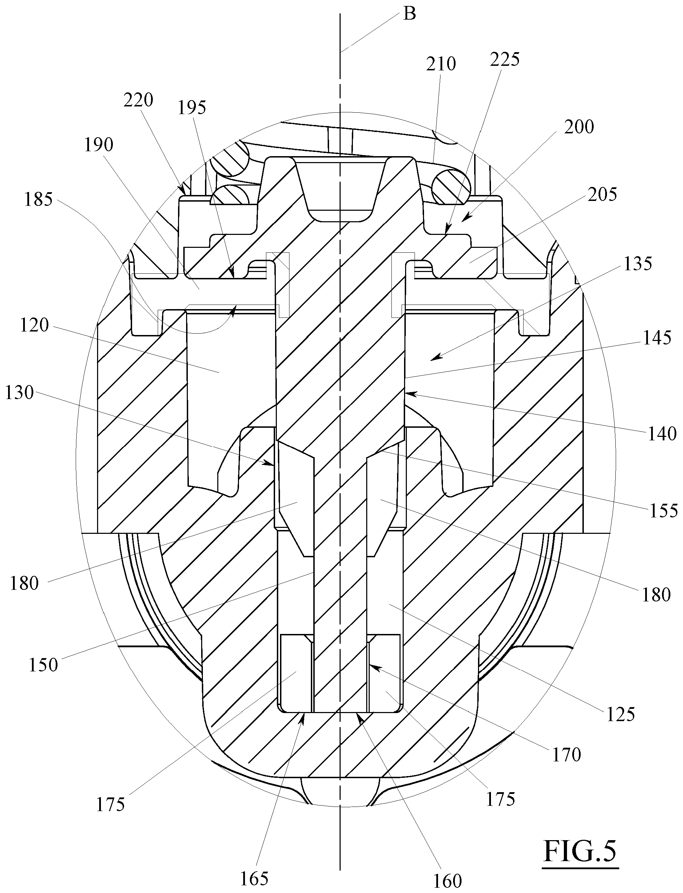

In particular (see Figures 4 and 5), the stem 140 of the shutter element 135 may comprise two successively arranged and mutually coaxial cylindrical portions, a first cylindrical portion 145 and a second cylindrical portion 150, wherein the first cylindrical portion 145 has a larger diameter than the second cylindrical portion 150.

The stem 140 may also comprise an intermediate conic-shaped portion 155, coaxial with the cylindrical portions 145 and 150, and extending in a tapered way (i.e. narrowing) from the first cylindrical portion 145 towards the second cylindrical portion 150, connecting them.

When the shutter element 135 is in the first end-of-stroke position, the first cylindrical portion 145 of the stem 140 is partially fitted (preferably by a small or very small distance) into the cylindrical hole 130.

The diameter of the first cylindrical portion 145 is in any case smaller (preferably slightly smaller) than the diameter of the cylindrical hole 130, so that an annular gap (preferably rather narrow) remains defined between these two bodies, which allows the passage of liquid from the inlet chamber 120 to the outlet chamber 125.

As the shutter element 135 moves towards the second end-of-stroke position (upwardly with respect to Figures 4 and 5), the first cylindrical portion 145 of the stem 140 completely withdraws from the cylindrical hole 130 and progressively moves away from the latter, thereby increasing the size of the passage between the inlet chamber 120 and the outlet chamber 125, which is defined by the annular gap established between the edge of the cylindrical hole 130 and the proximal edge of the first cylindrical portion 145.

When the shutter element 135 reaches the second end-of-stroke position, the first cylindrical portion 145 is completely contained in the inlet chamber 120 and the annular passage port has the maximum permissible size.

The second cylindrical portion 150 of the stem 140 is at least partially accommodated in the cylindrical hole 130, both when the shutter element 135 is in the first end-of-stroke position and when it is in the second end-of-stroke position.

Since, however, the diameter of the second cylindrical portion 150 is smaller than that of the first cylindrical portion 145 and, consequently, than the diameter of the cylindrical hole 130, a rather large gap is always defined between the second cylindrical portion 150 and the cylindrical hole 130, which does not hinder the flow of the liquid.

The main function of the second cylindrical portion 150 is to precisely guide the sliding of the shutter element 130 and to define the first end-of-stroke position.

In this regard, the second cylindrical portion 150 extends further away from the first cylindrical portion 145 to terminate with a free distal end 160 protruding into the outlet chamber 125.

When the shutter element 130 reaches the first end-of-stroke position, this free end 160 of the second cylindrical portion 145 rests against a first stop surface 165 of the valve body 105, which faces inwardly towards the outlet chamber 125 and is adapted to prevent the shutter element 130 from moving further.

In other words, the contact between the free end 160 of the second cylindrical portion 145 and the stop surface 165 establishes the first end-of-stroke position of the shutter element 135.

Within the outlet chamber 125 there is also a guide seat 170 which is arranged coaxial to the cylindrical hole 130 and is adapted to slidingly accommodate the end section of the second cylindrical portion 150, i.e., that at the free end 160.

This guide seat 170 is generally shaped in such a way as to allow the second cylindrical portion 150 to slide along the central axis B, while preventing its movement in the transverse direction.

In this regard, the guide seat 170 may be defined by a cylindrical cavity or, as in the example illustrated, by a plurality of fins 175 radially arranged around the central axis B of the cylindrical hole 130, for example but not necessarily by three fins 175.

These fins 175, which may protrude from the stop surface 165 and extend towards the inside of the outlet chamber 125, are individually conformed as a flap lying in a plane containing the central axis B and having an inner edge, of substantially rectilinear shape, which is proximal and parallel to the central axis B itself.

The fins 175 may be arranged angularly equidistant about the central axis B and their inner edges may be tangential to a same cylindrical (imaginary) surface, which is coaxial with the cylindrical hole 130 and has a diameter substantially equal to that of the end section of the second cylindrical portion 150.

In this way, the fins 175 create a constraint that is equivalent to that of a cylindrical seat, but with the advantage of not creating volumes wherein some of the liquid passing through the outlet chamber 125 might stagnate.

In any case, the axial extension of the guide seat 170 from the stop surface 165 is preferably greater than the overall run of the shutter element 135 from the first to the second end-of-stroke position, so that the stem 140 is constantly guided.

The stem 140 may in turn comprise a plurality of longitudinal fins 180, for example, but not necessarily three longitudinal fins 180, which protrude radially from the second cylindrical portion 150 in such a way as to be slidably fitted into the cylindrical hole 130.

Each of these longitudinal fins 180 is shaped as a flap lying in a plane containing the central axis B and having an outer edge, substantially rectilinear in shape, which is distal and parallel to the central axis B itself.

Each longitudinal fin 180 may also extend axially from the first cylindrical portion 145, e.g. originating from the conic intermediate portion 155, towards the free end 160 of the second cylindrical portion 150, for a length substantially equal to or greater than the length of the cylindrical hole 130.

The longitudinal fins 180 may be arranged radially, angularly equidistant about the central axis B, and their outer edges may be tangential to a same cylindrical (imaginary) surface, which is coaxial with the cylindrical hole 130 and has a diameter substantially equal to the same, or possibly equal to the diameter of the first cylindrical portion 145 of the shutter element 135.

In this way, the longitudinal fins 180 also perform the function of appropriately centering the shutter element 135 in relation to the cylindrical hole 130, avoiding transverse movements which could change the size of the passage port and which could cause front contacts (e.g. while moving from the second to the first end-of-stroke position) between the edge of the cylindrical hole 130 and the edge of the first cylindrical portion 145, making the operation of the valve 100 uncertain.

Another function of these longitudinal fins 180 is to guide the liquid flowing from the inlet chamber 120 to the outlet chamber 125, minimising cavitation phenomena that might otherwise cause rapid wear and/or noise.

The shutter element 135 further comprises at least one pushing surface 185, which protrudes radially from the stem 140, so that it is not parallel to the central axis B.

In particular, this pushing surface 185 protrudes radially from the portion of the stem 140 that is located in the inlet chamber 120, in this case from the first cylindrical portion 145.

In this way, the pushing surface 185 is adapted to at least partially delimit the inlet chamber 120 and is therefore subjected to the pressure existing within the latter, transforming it into a thrust which acts on the shutter element 135 in the sense of moving it from the first end-of-stroke position towards the second end-of-stroke position.

In the example shown, this pushing surface 185 is made available by a flexible annular membrane 190, which comprises an inner perimeter edge tightly coupled to the stem 140 and an outer perimeter edge tightly coupled to the valve body 105.

In particular, the outer perimeter edge of the flexible membrane 190 is tightly coupled to the edge of a through-hole that puts the inlet chamber 120 in communication with the outside of the valve body 105 and that is tightly sealed, precisely, by the shutter element 135 and the flexible annular membrane 190.

This flexible membrane 190 therefore comprises a first annular surface facing and exposed towards the inlet chamber 120, which defines the pushing surface 185, and an opposite second annular surface 195 facing outside of the inlet chamber 120.

It cannot be however excluded that, in other embodiments, the pushing surface 185 may also be at least partially defined by a rigid portion of the shutter element 135, just as it cannot be excluded that the coupling between the latter and the valve body 105 may be a traditional sliding coupling in which the sealing is realised by means of a sliding O-ring type gasket.

Compared to this more traditional solution, however, the use of the flexible membrane 190 has the advantage of being safer and more reliable, reducing the areas wherein the liquid can stagnate, giving rise to deposits that could lead to clogging and malfunctions.

The shutter element 135 further comprises a head portion 200, which is attached to the end of the stem 140 opposite the free end 160 and is located beyond the flexible membrane 190, outside the inlet chamber 120.

In particular, this head portion 200 may have an annular flange 205, coaxial to the stem 140, and projecting radially from it (i.e. having a larger diameter), which may be in contact with the second annular surface 195 of the flexible membrane 190.

Preferably, the head portion 200 is made in one piece with the stem 140, producing a monobloc component that is coupled to the flexible membrane 190 as a whole.

The valve 100 further comprises a spring 210, which is adapted to act on the shutter element 135 so as to push it towards the first end-of-stroke position, in contrast to the action of the pressure existing in the inlet chamber 120 and acting on the pushing surface 185.

In the example shown, the spring 210 is a helical compression spring having an axis coincident with the central axis B of cylindrical hole 130 and, consequently, of the stem 170.

This spring 210 may be positioned outside of the inlet chamber 120, where it may be enclosed and protected within a cover 215 which may be stably fixed to the valve body 105, also covering the head portion 200 of the shutter element 135 and possibly helping to block the outer perimeter edge of the flexible membrane 190.

The cover 215 may also be provided with a second stop surface 220, which is adapted to receive the head portion 200 of the shutter element 135, for example the annular flange 205, when the shutter element 135 reaches the second end-of-stroke position, preventing it from proceeding further.

In other words, this contact between the head portion 200 and the second stop surface 220 establishes the second end-of-stroke position of the shutter element 135.

Inside the cover 215, the spring 210 may be interposed and compressed between the head portion 200 of the shutter element 135 and a top wall of the cover 215 itself, so as to constantly push the shutter element 135 towards the first end-of stroke position.

In particular, a first axial end of the spring 210 may be in direct contact with an abutment surface 225 made available by the annular flange 205 of the shutter element 135, while the opposite axial end may be in direct contact with a slider 230 contained in the cover 215 and axially blocked against the top wall.

To adjust the pre-compression of the spring 210, the slider 230 may be provided with a central threaded hole into which a screw 235 is screwed.

This screw 235 is placed inside the cover 215, where it is coaxial with the stem 140 of the shutter element 135 and where it is pushed by the spring 210 against the top wall.

At the screw 235, the top wall of the cover 215 may have a through-hole 240 that provides access to a manoeuvring head of the screw 235 itself, which may, for example, be provided with an Allen key recess.

In this way, an operator acting from outside can rotate the screw 235, which will produce a corresponding axial translation of the slider 230, increasing or alternatively reducing the pre-compression of the spring 210.

Of course, in order for this mechanism to work properly, it is preferable that the slider 230 cannot rotate on itself about the central axis B.

For this purpose, the slider 230 may have a prismatic outer shape, like that of a common hexagonal threaded nut, and may be fitted into a conjugate prismatic seat made inside the cover 215.

In this way, while adjusting the pre-compression, the spring 210 is only subjected to axial stresses, avoiding torsional stresses that could otherwise cause jerky adjustment and/or loss of alignment between the parts.

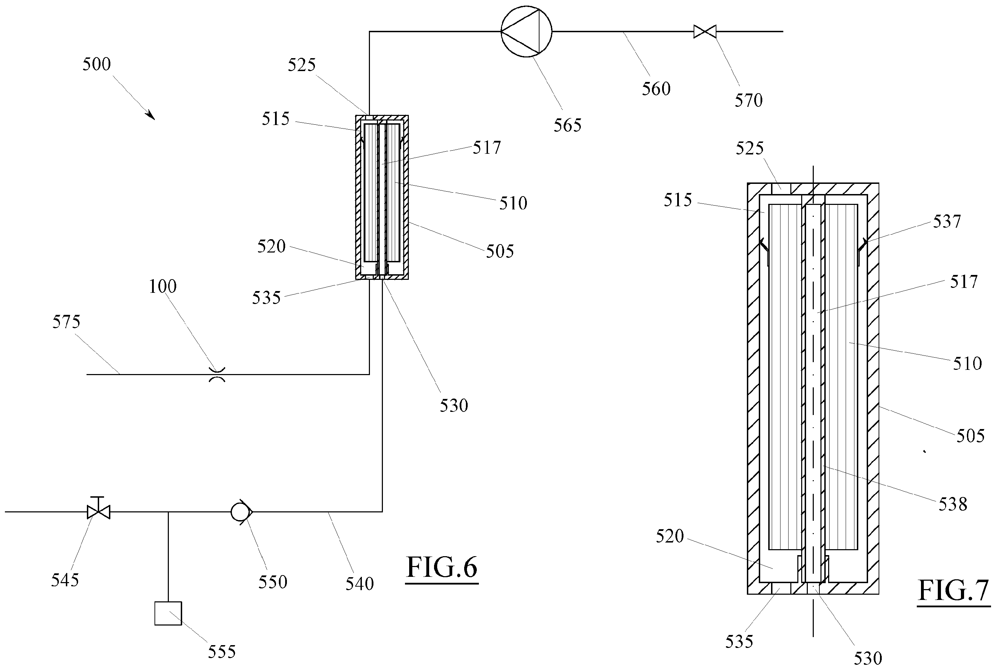

As mentioned in the introduction, the valve 100 described above is primarily intended for use in a reverse osmosis filtration plant, e.g. for the filtration of water, of the type referred to as 500 and schematically illustrated in Figure 6.

The filtration plant 500 comprises at least a container 505 (usually also named as vessel), which contains an osmotic semi-permeable membrane 510.

This osmotic membrane 510 is adapted to subdivide the inner volume of the container 505 into three distinct chambers, a first chamber 515, a second chamber 517 and a third chamber 520.

The container 505 is therefore provided with an inlet 525 for water to be filtered, a first outlet 530 for filtered water (permeate) and a second outlet 535 for waste water (concentrate).

The inlet 525 is in communication with the first chamber 515, the first outlet 530 is in communication with the second chamber 517, while the second outlet 535 is in communication with the third chamber 520.

In particular, the osmotic membrane 510 may be shaped as a mat consisting of two layers separated by a gap and spirally wound to form a roll.

This roll is inserted into the container 505 by interposing an annular gasket 537 separating the inlet 525 from the second outlet 535, so that water cannot flow directly between them but is forced to flow axially between the windings of the osmotic membrane 510, whose gap is in communication with the first outlet 530, typically through a central support pipe 538.

Thus, the second chamber 517 is defined by the gap between the two layers of the osmotic membrane 510 and the support pipe 538, while the first chamber 515 and the third chamber 520 are both defined outside the osmotic membrane 510 but are mutually separated by the annular gasket 537.

The first outlet 530 may be connected to an outlet duct 540 for filtered water (permeate) which may in turn be connected with a user intended to receive water.

Along this outlet duct 540, a withdrawal valve 545 may be arranged, e.g. manually operated, which is selectively adapted to allow or prevent the flow of permeate water.

Upstream of the withdrawal valve 545 (with respect to the direction of the water), the outlet duct 540 may be intercepted by a check valve 550, which is adapted to allow water to flow to the pick-up valve 545, preventing reverse flow.

The outlet duct 540 may be additionally equipped with a pressure switch 555, or any other pressure sensor, which is adapted to detect the pressure existing in the section of the duct comprised between the withdrawal valve 545 and the check valve 550.

An inlet duct 560 adapted to supply water to be filtered may be connected to the inlet 525 of the container 505 and may in turn be connected to the water mains.

A pump 565 may be arranged along this inlet duct 560, e.g. a positive displacement pump, which is suitable for pumping the water to be filtered to the first chamber 515 of the container 505.

Upstream of the pump 565 (with respect to the water direction), the inlet duct 560 may also be provided with a solenoid valve 570.

The pump 565 and/or solenoid valve 570 may be controlled on the basis of measurements carried out by the pressure switch 555.

Finally, a duct 575 for discharging waste water (concentrate) may be connected to the second outlet 535 of the container 505, which can lead to a sewage disposal system, for example.

This discharge duct 575 may be intercepted by the valve 100 described above, which is arranged so that the concentrate from the container 505 flows through the valve 100 from the inlet duct 110 to the outlet duct 115.

The main function of the valve 100 is to create a throttle making it possible to increase the pressure inside the first and third chambers 515 and 520 of the container 505, reaching values capable of overcoming the osmotic pressure difference between the water present in the first and third chambers 515 and 520 and the water present in the second chamber 517.

Thus, a part of the water flowing from the inlet 525 to the second outlet 535 of the container 505, touching slightly tangentially the osmotic membrane 510, is able to pass through the osmotic membrane 510 itself, reaching the second chamber 517 of the permeate and the outlet duct 540, while the salts or other substances dissolved therein remain confined in the third chamber 520 of the concentrate and are discharged together with the latter through the outlet duct 575.

The functioning of the valve 100 is therefore as follows.

When the pump 565 is switched on, concentrated water from the container 505 increases the pressure in the inlet chamber 120.

This pressure acts on the pushing surface 185 of the shutter element 135, generating a force that tends to move the shutter element 135 from the first end-of-stroke position to the second end-of-stroke position, in contrast to the action of the spring 210.

As the shutter element 135 moves to the second end-of-stroke position, the size of the passage port between the stem 140 and the cylindrical hole 130 increases, progressively reducing hydraulic losses and thus limiting pressure increase.

The movement of the shutter element 135 ends when a balance condition is reached wherein the thrust exerted by the spring 210 is equal to the thrust exerted by the pressure in the inlet chamber 120.

In this way, the pressure in the inlet chamber 120 essentially matches with the pressure in the third chamber 520 of the container 505 (also known as the operating pressure).

In particular, it is preferable for the thrust exerted by the spring 210 to be adjusted, for instance by varying the pre-compression of the spring 210 itself, so that this balance condition is reached when the shutter element 135 is in an intermediate position between the first end-of-stroke position and the second end-of-stroke position.

In addition, it is preferable that the pre-compression of the spring 210 is adjusted so that the aforementioned balance condition is achieved for a predetermined nominal operating pressure of the system 500.

In this way, if during operation the flow rate of concentrate passing through the valve 100 increases, for example as a result of a decrease in the efficiency of the osmotic membrane 510, the pressure in the inlet chamber 120 also tends to increase, pushing the shutter element 135 towards the second end-of-stroke position.

However, this movement produces a concomitant increase in the passage port between the stem 140 and the cylindrical hole 130 and thus a decrease in pressure loss, so that the shutter element 135 will stop in a new balance position, for which the pressure in the inlet chamber 120 is not very different from the nominal pressure, despite the increase in the flow rate passing through the valve 100.

In case it is not possible to reach this new balance position, e.g. due to an excessive increase in the flow rate and/or insufficient pre-compression of the spring 210, the shutter element 135 would in any case be locked at least in the second end-of-stroke position, due to the direct contact between the head portion 200 and the second stop surface 205, thus preserving the flexible membrane 190 from possible tearing and breaking.

Conversely, in case during operation the flow rate of concentrate passing through the valve 100 decreases, for example after an increase in the efficiency of the osmotic membrane 510, the pressure in the inlet chamber 120 also tends to decrease, thereby allowing the spring 210 to push the shutter element 135 towards the first end-of-stroke position.

However, this movement produces a concomitant decrease in the passage port between the stem 140 and the cylindrical hole 130 and thus an increase in pressure loss, so that the shutter element 135 will stop in a new balance position, for which the pressure in the inlet chamber 120 is not very different from the nominal pressure, despite the decrease in the flow rate passing through the valve 100.

In case it is not possible to reach this new balance position, e.g. due to an excessive decrease in the concentrate flow rate, the shutter element 135 would nevertheless at least be locked in the first end-of-stroke position, thanks to the direct contact of the free end 160 and the first stop surface 165, without ever achieving complete closure of the cylindrical hole 130.

In this way, it is ensured that a certain flow of concentrate is always flowing through the valve 100, preventing said concentrate with a high concentration of salts or other dissolved substances from stagnating for a long time inside the first and third chambers 515 and 520 of the container 505 and/or inside the valve 100 itself, where it could cause the precipitation of solid deposits that risk clogging the osmotic membrane 510 and/or the valve 100, damaging them or impairing their proper functioning.

When the pressure switch 555 detects a pressure above a pre-set threshold value, indicating for example that the withdrawal valve 545 has been closed, the pump 565 may be automatically stopped and the solenoid valve 570 is also closed.

In some cases, the solenoid valve 570 may be closed with a certain delay, so as to achieve a flushing of the filtration system 500 immediately after production, in order to lower the concentration of salts in the concentrate located in the discharge duct 575 and possibly inside the third chamber 520 of the container 505, bringing it for example to a value equal to that of the incoming water.

This reduces the possibility that salts contained in the concentrate precipitate within these volumes, damaging or otherwise impairing the proper functioning of the osmotic membrane 510 and/or valve 100.

When, conversely, the pressure switch 555 detects that the pressure has fallen below the threshold value again, i.e. that the withdrawal valve 545 has been reopened, the solenoid valve 570 may be automatically opened and the pump 565 is put back into action.

Although the valve 100 has been described as a stand-alone component, it cannot be excluded that, in other embodiments, it may be integrated into other components and/or devices.

In particular, the valve body 105 may have a more complex shape than the described one, so as to serve as a supporting body not only for the valve 100 but also for other devices, or to define other ducts of the filtration plant 500.

By way of example, the valve body 105 could define in a single body both the section of the discharge duct 575 wherein the valve 100 is fitted, i.e. which contains the shutter element 135 and the other components associated therewith, and an end section of the outlet duct 540, such as that to which the pressure switch 555 and the check valve 550 are associated.

Obviously in these cases, the connection system of the valve body 105 with the container 505 containing the osmotic membrane 510 could also change, without, however, changing the functionality of the valve 100 described above.

## Claims

1. A pressure stabilising valve (100), comprising:
- an inlet chamber (120),
- an outlet chamber (125),
- a cylindrical hole (130) adapted to make the inlet chamber (120) communicate with the outlet chamber (125),
- a shutter element (135) provided with a stem (140) coaxially fitted into the cylindrical hole (130),
- a spring (210) adapted to push the shutter element (135) towards a first end-of-stroke position, and
- a pushing surface (185) radially protruding with respect to the stem (140) and adapted to at least partially delimit the inlet chamber (120), which is adapted to transform the pressure prevailing in the inlet chamber (120) into a force that pushes the shutter element (135) in contrast with the action of the spring (210) towards a second end-of-stroke position,
**characterised in that** the stem (140) in the first end-of-stroke position defines with the cylindrical hole (130) a passage port which leaves open the communication between the inlet chamber (120) and the outlet chamber (125), and **in that** said passage port between the stem (140) and the cylindrical hole (130) progressively increases as the shutter element (135) moves from the first end-of-stroke position towards the second end-of-stroke position.

2. A valve (100) according to claim 1, comprising an inlet duct (110) communicating with the inlet chamber (120) and an outlet duct (115) communicating with the outlet chamber (125), which have axes (A) mutually coincident and orthogonal to the axis (B) of the cylindrical hole (130).

3. A valve (100) according to claim 1, wherein the stem comprises two mutually coaxial cylindrical portions, a first cylindrical portion (145) of which having a larger diameter and a second cylindrical portion (150) having a smaller diameter,
the first cylindrical portion (145) being at least partially fitted into the cylindrical hole (130) when the shutter element (135) is in the first end-of-stroke position and being completely extracted out of the cylindrical hole (130) when the shutter element (135) is in the second end-of-stroke position,
the second cylindrical portion (150) being at least partially fitted into the cylindrical hole (130) both when the shutter element (135) is in the first end-of-stroke position and when the shutter element (135) is in the second end-of-stroke position.

4. A valve (100) according to claim 3, wherein the stem (140) comprises a conic connecting portion (155) extending in a tapered way from the first cylindrical portion (145) to the second cylindrical portion (150).

5. A valve (100) according to claim 3, wherein the stem (140) comprises a plurality of longitudinal fins (180) arranged in a radial pattern, which radially protrude from the second cylindrical portion (150) and are slidingly fitted into the cylindrical hole (130).

6. A valve (100) according to claim 3, wherein a free end (160) of the second cylindrical portion (150) is slidably received in a guide seat (170) arranged coaxial to the cylindrical hole (130) and positioned in the outlet chamber (125).

7. A valve (100) according to claim 6, wherein said guide seat (170) is defined by a plurality of fins (175) arranged in a radial pattern about the axis (B) of the cylindrical hole (130).

8. A valve (100) according to claim 3, comprising a first stop surface (165) adapted to contact a free end (160) of the second cylindrical portion (145) when the shutter element (135) is in the first end-of-stroke position.

9. A valve (100) according to claim 1, wherein the pushing surface (185) is made available by a flexible annular membrane (190), which comprises an inner perimeter edge coupled to the stem (140) and an outer perimeter edge coupled to a valve body (105).

10. A valve (100) according to claim 1, wherein the shutter element (135) comprises a head portion (200) adapted to make available an abutment surface (225), arranged externally with respect to the inlet chamber (120), against which a first end of the spring (210) abuts.

11. A valve (100) according to claim 10, wherein said head portion (200) is made in a single piece with the stem (140).

12. A valve (100) according to claim 1, comprising a cover (215) adapted to contain the spring (210).

13. A valve (100) according to claim 10 and 12, wherein said cover (215) is provided with a second stop surface (220) adapted to contact the head portion (200) when the shutter element (135) is in the second end-of-stroke position.

14. A valve (100) according to claim 1, comprising an adjustment system for adjusting the compression of the spring (210).

15. A valve according to claims 10, 12 and 14, wherein said adjustment system comprises a slider (230) adapted to be in contact with a second end of the spring (210) and a screw (235) axially constrained to a top wall of the cover (215) and screwed to the slider (230).

16. A reverse osmosis filtration system (500) comprising:
- at least one container (505),
- an osmotic membrane (510) adapted to divide the inner volume of the container into three distinct chambers, a first chamber (515), a second chamber (517) and a third chamber (520),
- an inlet duct (560) of the liquid to be filtered communicating with the first chamber (515),
- a first outlet duct (540) of the permeate connected with the second chamber (517),
- a second outlet duct (575) of the concentrate connected with the third chamber (520), and
- a valve (100) according to any one of the preceding claims, whose inlet chamber (120) is connected to the third chamber (520) of the container (505) via the second outlet duct (575).

## Patentansprüche

1. Druckstabilisierungsventil (100), umfassend:
- eine Einlasskammer (120),
- eine Auslasskammer (125),
- ein zylindrisches Loch (130), das angepasst ist, um eine Kommunikation der Einlasskammer (120) mit der Auslasskammer (125) herzustellen,
- ein Verschlusselement (135), das mit einem Schaft (140) versehen ist, der koaxial in das zylindrische Loch (130) eingesetzt ist,
- eine Feder (210), die angepasst ist, um das Verschlusselement (135) in Richtung einer ersten Endlagenposition zu drücken, und
- eine Druckfläche (185), die in Bezug auf den Schaft (140) radial hervorsteht und angepasst ist, um die Einlasskammer (120) zumindest teilweise zu begrenzen, die angepasst ist, um den Druck, der in der Einlasskammer (120) herrscht, in eine Kraft umzuwandeln, die das Verschlusselement (135) gegen die der Wirkung der Feder (210) in eine zweite Endlagenposition zu drücken,
**dadurch gekennzeichnet, dass** der Schaft (140) in der ersten Endlagenposition mit dem zylindrischen Loch (130) eine Durchgangsöffnung definiert, die die Kommunikation zwischen der Einlasskammer (120) und der Auslasskammer (125) offen lässt, und dass die Durchgangsöffnung zwischen dem Schaft (140) und dem zylindrischen Loch (130) progressiv zunimmt, wenn sich das Verschlusselement (135) von der ersten Endlagenposition zu der zweiten Endlagenposition bewegt.

2. Ventil (100) nach Anspruch 1, umfassend einen Einlasskanal (110), der mit der Einlasskammer (120) in Verbindung ist, und einen Auslasskanal (115), der mit der Auslasskammer (125) in Kommunikation ist, die Achsen (A) aufweisen, die zueinander übereinstimmend und orthogonal zu der Achse (B) des zylindrischen Lochs (130) sind.

3. Ventil (100) nach Anspruch 1, wobei der Schaft zwei zueinander koaxiale zylindrische Abschnitte aufweist, wovon ein erster zylindrischer Abschnitt (145) einen größeren Durchmesser aufweist und ein zweiter zylindrischer Abschnitt (150) einen kleineren Durchmesser aufweist,
wobei der erste zylindrische Abschnitt (145) zumindest teilweise in das zylindrische Loch (130) eingepasst ist, wenn das Verschlusselement (135) in der ersten Endlagenposition ist, und vollständig aus dem zylindrischen Loch (130) herausgezogen ist, wenn das Verschlusselement (135) in der zweiten Endlagenposition ist,
der zweite zylindrische Abschnitt (150) sowohl wenn das Verschlusselement (135) in der ersten Endlagenposition ist als auch wenn das Verschlusselement (135) in der zweiten Endlagenposition ist, zumindest teilweise in das zylindrische Loch (130) eingepasst ist.

4. Ventil (100) nach Anspruch 3, wobei der Schaft (140) einen konischen Verbindungsabschnitt (155) umfasst, der sich auf sich verjüngende Weise von dem ersten zylindrischen Abschnitt (145) zu dem zweiten zylindrischen Abschnitt (150) erstreckt.

5. Ventil (100) nach Anspruch 3, wobei der Schaft (140) eine Vielzahl von Längsrippen (180) umfasst, die in einem radialen Muster angeordnet sind, die radial aus dem zweiten zylindrischen Abschnitt (150) hervorstehen und gleitend in das zylindrische Loch (130) eingepasst sind.

6. Ventil (100) nach Anspruch 3, wobei ein freies Ende (160) des zweiten zylindrischen Abschnitts (150) gleitend in einem Führungssitz (170) aufgenommen ist, der koaxial zu dem zylindrischen Loch (130) angeordnet und in der Auslasskammer (125) angeordnet ist.

7. Ventil (100) nach Anspruch 6, wobei der Führungssitz (170) durch eine Vielzahl von Rippen (175) definiert ist, die in einem radialen Muster um die Achse (B) des zylindrischen Lochs (130) angeordnet sind.

8. Ventil (100) nach Anspruch 3, umfassend eine erste Anschlagfläche (165), die angepasst ist, um ein freies Ende (160) des zweiten zylindrischen Abschnitts (145) zu berühren, wenn das Verschlusselement (135) in der ersten Endlagenposition ist.

9. Ventil (100) nach Anspruch 1, wobei die Druckfläche (185) durch eine flexible ringförmige Membran (190) verfügbar gemacht wird, die einen inneren Umfangsrand, der mit dem Schaft (140) gekoppelt ist, und einen äußeren Umfangsrand, der mit einem Ventilkörper (105) gekoppelt ist, umfasst.

10. Ventil (100) nach Anspruch 1, wobei das Verschlusselement (135) einen Kopfabschnitt (200) umfasst, der angepasst ist, um eine Anlagefläche (225) verfügbar zu machen, die in Bezug auf die Einlasskammer (120) außen angeordnet ist und an der ein erstes Ende der Feder (210) anliegt.

11. Ventil (100) nach Anspruch 10, wobei der Kopfabschnitt (200) einteilig mit dem Schaft (140) gefertigt ist.

12. Ventil (100) nach Anspruch 1, umfassend eine Abdeckung (215), die angepasst ist, um die Feder (210) zu enthalten.

13. Ventil (100) nach Anspruch 10 und 12, wobei die Abdeckung (215) mit einer zweiten Anschlagfläche (220) versehen ist, die angepasst ist, um den Kopfabschnitt (200) zu berühren, wenn das Verschlusselement (135) in der zweiten Endlagenposition ist.

14. Ventil (100) nach Anspruch 1, umfassend ein Einstellsystem zum Einstellen der Kompression der Feder (210).

15. Ventil nach einem der Ansprüche 10, 12 und 14, wobei das Einstellsystem einen Schieber (230), der angepasst ist, um mit einem zweiten Ende der Feder (210) in Kontakt zu sein, und eine Schraube (235), die axial an einer oberen Wand der Abdeckung (215) befestigt und mit dem Schieber (230) verschraubt ist, umfasst.

16. Umkehrosmose-Filtrationssystem (500), umfassend:
- mindestens einen Behälter (505),
- eine osmotische Membran (510), die angepasst ist, um das Innenvolumen des Behälters in drei verschiedene Kammern, eine erste Kammer (515), eine zweite Kammer (517) und eine dritte Kammer (520), zu unterteilen,
- einen Einlasskanal (560) der zu filternden Flüssigkeit, der mit der ersten Kammer (515) in Kommunikation ist,
- einen ersten Auslasskanal (540) des Permeats, der mit der zweiten Kammer (517) in Kommunikation ist,
- einen zweiten Auslasskanal (575) des Konzentrats, der mit der dritten Kammer (520) in Kommunikation ist, und
- ein Ventil (100) nach einem der vorherigen Ansprüche, dessen Einlasskammer (120) über den zweiten Auslasskanal (575) mit der dritten Kammer (520) des Behälters (505) verbunden ist

## Revendications

1. Vanne de stabilisation de pression (100), comprenant :
- une chambre d'admission (120),
- une chambre de sortie (125),
- un trou cylindrique (130) adapté pour mettre en communication la chambre d'admission (120) et la chambre de sortie (125),
- un élément obturateur (135) pourvu d'une tige (140) montée de manière coaxiale dans le trou cylindrique (130),
- un ressort (210) adapté pour pousser l'élément obturateur (135) vers une première position de fin de course, et
- une surface de poussée (185) faisant saillie de manière radiale par rapport à la tige (140) et adaptée pour délimiter au moins en partie la chambre d'admission (120), qui est adaptée pour transformer la pression qui existe dans la chambre d'admission (120) en une force qui pousse l'élément obturateur (135) à l'opposé de l'action du ressort (210) vers une deuxième position de fin de course,
**caractérisée en ce que** la tige (140) dans la première position de fin de course définit avec le trou cylindrique (130) un orifice de passage qui laisse ouverte la communication entre la chambre d'admission (120) et la chambre de sortie (125), et **en ce que** ledit orifice de passage entre la tige (140) et le trou cylindrique (130) augmente progressivement à mesure que l'élément obturateur (135) se déplace de la première position de fin de course vers la deuxième position de fin de course.

2. Vanne (100) selon la revendication 1, comprenant un conduit d'admission (110) en communication avec la chambre d'admission (120) et un conduit de sortie (115) en communication avec la chambre de sortie (125), qui ont des axes (A) mutuellement coïncidents et orthogonaux à l'axe (B) du trou cylindrique (130).

3. Vanne (100) selon la revendication 1, dans laquelle la tige comprend deux parties cylindriques mutuellement coaxiales, une première partie cylindrique (145) ayant un diamètre plus grand et une deuxième partie cylindrique (150) ayant un diamètre plus petit,
la première partie cylindrique (145) étant au moins en partie logée dans le trou cylindrique (130) lorsque l'élément obturateur (135) se trouve dans la première position de fin de course, et étant complètement extraite du trou cylindrique (130) lorsque l'élément obturateur (135) se trouve dans la deuxième position de fin de course,
la deuxième partie cylindrique (150) étant au moins en partie logée dans le trou cylindrique (130) à la fois lorsque l'élément obturateur (135) se trouve dans la première position de fin de course et lorsque l'élément obturateur (135) se trouve dans la deuxième position de fin de course.

4. Vanne (100) selon la revendication 3, dans laquelle la tige (140) comprend une partie de connexion conique (155) s'étendant de manière effilée depuis la première partie cylindrique (145) jusqu'à la deuxième partie cylindrique (150).

5. Vanne (100) selon la revendication 3, dans laquelle la tige (140) comprend une pluralité d'ailettes longitudinales (180) disposées selon un motif radial, qui font saillie de manière radiale à partir de la deuxième partie cylindrique (150) et sont montées de manière coulissante dans le trou cylindrique (130).

6. Vanne (100) selon la revendication 3, dans laquelle une extrémité libre (160) de la deuxième partie cylindrique (150) est reçue de manière coulissante dans un siège de guidage (170) disposé de manière coaxiale par rapport au trou cylindrique (130) et positionné dans la chambre de sortie (125).

7. Vanne (100) selon la revendication 6, dans laquelle ledit siège de guidage (170) est défini par une pluralité d'ailettes (175) disposées selon un motif radial autour de l'axe (B) du trou cylindrique (130).

8. Vanne (100) selon la revendication 3, comprenant une première surface d'arrêt (165) adaptée pour entrer en contact avec une extrémité libre (160) de la deuxième partie cylindrique (145) lorsque l'élément obturateur (135) se trouve dans la première position de fin de course.

9. Vanne (100) selon la revendication 1, dans laquelle la surface de poussée (185) est rendue disponible par une membrane annulaire flexible (190), qui comprend un bord périphérique intérieur couplé à la tige (140) et un bord périphérique extérieur couplé à un corps de vanne (105).

10. Vanne (100) selon la revendication 1, dans laquelle l'élément obturateur (135) comprend une partie de tête (200) adaptée pour rendre disponible une surface de butée (225), disposée à l'extérieur par rapport à la chambre d'admission (120), contre laquelle une première extrémité du ressort (210) vient en butée.

11. Vanne (100) selon la revendication 10, dans laquelle ladite partie de tête (200) est réalisée d'un seul tenant avec la tige (140).

12. Vanne (100) selon la revendication 1, comprenant un couvercle (215) adapté pour contenir le ressort (210).

13. Vanne (100) selon les revendications 10 et 12, dans laquelle ledit couvercle (215) est muni d'une deuxième surface d'arrêt (220) adaptée pour entrer en contact avec la partie de tête (200) lorsque l'élément obturateur (135) se trouve dans la deuxième position de fin de course.

14. Vanne (100) selon la revendication 1, comprenant un système de réglage permettant de régler la compression du ressort (210).

15. Vanne selon les revendications 10, 12 et 14, dans laquelle ledit système de réglage comprend un coulisseau (230) adapté pour être en contact avec une deuxième extrémité du ressort (210) et une vis (235) fixée de manière axiale à une paroi supérieure du couvercle (215) et vissée au coulisseau (230).

16. Système de filtration par osmose inverse (500) comprenant :
- au moins un récipient (505),
- une membrane osmotique (510) adaptée pour diviser le volume intérieur du récipient en trois chambres distinctes, une première chambre (515), une deuxième chambre (517) et une troisième chambre (520),
- un conduit d'admission (560) du liquide à filtrer en communication avec la première chambre (515),
- un premier conduit de sortie (540) du perméat connecté à la deuxième chambre (517),
- un deuxième conduit de sortie (575) du concentré connecté à la troisième chambre (520),
- vanne (100) selon l'une quelconque des revendications précédentes, dont la chambre d'admission (120) est connectée à la troisième chambre (520) du récipient (505) via le deuxième conduit de sortie (575).
